# EUROPÄISCHE PATENTANMELDUNG

(11) **EP 3 029 345 A1**
(43) Veröffentlichungstag der Anmeldung: **08.06.2016**
(21) Anmeldenummer: 15194845.2
(22) Anmeldetag: 17.11.2015
(51) Int. Cl.: F16C 33/20, D02G 3/44

(54) **BAUTEIL, UMFASSEND WENIGSTENS EINE GLEITSCHICHT**

(30) Priorität: 27.11.2014 DE 102014224304
(71) Anmelder: Aktiebolaget SKF, 41 550 Göteborg (SE)
(72) Erfinder: Vierling, Andreas, 97453 Schonungen (DE); Henninger, Frank, 97506 Grafenrheinfeld (DE)
(74) Vertreter: Kuhstrebe, Jochen

(57) **Zusammenfassung**

Ausführungsbeispiele umfassen ein Bauteil (1), mit wenigstens einer Gleitschicht (2), das ausgebildet ist, um über die Gleitschicht (2) entlang wenigstens einer Bewegungslinie (3) zu gleiten. Die Gleitschicht (2) weist einen faserverstärkten Werkstoff mit wenigstens einer Mehrkomponentenfaser (5) auf. Die Mehrkomponentenfaser (5) hat wenigstens eine in wenigstens einer ersten Struktur (13) angeordnete erste Komponente und wenigstens eine zweite in wenigstens einer zweiten Struktur (14) angeordnete Komponente. Die beiden Strukturen (13, 14) sind stoffschlüssig miteinander verbunden und in einer Haupterstreckungsrichtung der Mehrkomponentenfaser (5) parallel zueinander angeordnet. Entweder die erste Komponente oder die zweite Komponente ist PTFE.

## Beschreibung

Ausführungsbeispiele beziehen sich auf Bauteil, umfassend wenigstens eine Gleitschicht.

Gleitschichten oder Bauteile mit Gleitschichten werden in ganz unterschiedlichen Anwendungen eingesetzt. Gleitschichten kommen beispielsweise bei Gleitlagern, Linearsystemen, Linearführungen, linearen Gleitführung, dann meist als Plattenform, als Buchse oder Gelenklager zum Einsatz. Als Werkstoff für konventionelle Gleitschichten werden neben anderen Materialen auch faserverstärkte Kunststoffe, beispielsweise faserverstärkte Verbundgleitwerkstoffe oder Wickelbuchsen eingesetzt. Dabei kann es sich beispielsweise um trockene, aber auch um nass-geschmierte Gleitmaterialien handeln, die in vielen Varianten eingesetzt werden können.

Zur Herstellung von konventionellen Gleitlagern oder Gleitschichten werden oft reine PTFE-Garne mit Verstärkungsfasern unterschiedlichstem Ursprungs, zum Beispiel Glas oder Aramid verwoben oder gewickelt. Diese können dann mit einer Matrix aus einem Matrixmaterial imprägniert sein. Zusätzlich werden bei manchen Gleitschichten noch reibungsmindernde oder verschleißmindemde Additive in die Matrix mit eingebaut. Unter Umständen werden auch PTFE-Heterogarne beispielsweise als Filamentmischgarne eingesetzt. Diese Vorgehensweise führt in vielen Fällen zu einem graduellen Aufbau, d.h. einer unterschiedlichen Verteilung der reibungsmindernden bzw. verstärkenden Bestandteile im Gleitwerkstoff, beispielsweise in Dickenrichtung.

Zudem können faserverstärkte Werkstoffe, die nur PFTE als Fasern aufweisen, in manchen Fällen eine zu geringe mechanische Stabilität für den Einsatz als Gleitschicht aufweisen. PTFE kann gegebenenfalls die stärkste anti-adhäsive Neigung unter allen Polymeren haben. Unter Umständen können sich daraus gute reibungsmindernde, selbstschmierende Eigenschaften von PTFE ableiten. Allerdings kann es dadurch eventuell auch vorkommen, dass sich PTFE, unabhängig davon ob es in Partikel- oder Faserform vorliegt, nur bedingt an oder in eine Matrix oder ein Matrixmaterial einbinden lässt. Unter ungünstigen Bedingungen kann keine ausreichende Faser-Matrix-Anhaftung erreicht werden. Die Faser-Matrix-Anhaftung kann jedoch möglicherweise essentiell zur Gewährleistung einer ausreichenden mechanischen Stabilität des faserverstärkten Werkstoffs oder der Gleitschicht sein.

Es besteht daher ein Bedarf daran, einen Kompromiss zwischen Gleiteigenschaften und mechanischer Stabilität einer Gleitschicht zu verbessen. Diesem Bedarf trägt ein Bauteil mit einer Gleitschicht nach dem unabhängigen Anspruch Rechnung.

Ausführungsbeispiele betreffen ein Bauteil mit wenigstens einer Gleitschicht. Das Bauteil kann über die Gleitschicht entlang wenigstens einer Bewegungslinie gleiten. Die Gleitschicht umfasst einen faserverstärkten Werkstoff mit wenigstens einer Mehrkomponentenfaser. Die Mehrkomponentenfaser umfasst wenigstens eine in wenigstens einer ersten Struktur angeordnet erste Komponente und wenigstens eine zweite in wenigstens einer zweiten Struktur angeordnete Komponente. Die erste und die zweit Struktur sind dabei stoffschlüssig miteinander verbunden und in einer Haupterstreckungsrichtung der Mehrkomponentenfaser parallel zueinander angeordnet, wobei entweder die erste Komponente oder die zweite Komponente PTFE ist. Bei manchen Ausführungsbeispielen kann so ermöglicht werden, dass die Gleitschicht eine bessere mechanische Stabilität aufweist. Dies kann beispielsweise dadurch erreicht werden, weil die Mehrkomponentenfaser neben dem PTFE als erste oder zweite Komponente noch ein anderes Material aufweist, das eine bessere Verbindung mit dem Matrixmaterial eingehen kann.

Eine Faser und damit auch eine Mehrkomponentenfaser kann zum Beispiel ein Element oder ein Bauteil sein, das in eine Richtung, nämlich ihre Haupterstreckungsrichtung, eine wesentlich größere Ausdehnung aufweist als in eine zweite und in eine dritte Richtung, wobei die drei Richtungen ein Koordinatensystem zwischen sich aufspannen. Die Ausdehnung der Faser kann eventuell in die erste Richtung um mindestens einen Faktor 100, 1.000, 10.000 oder 100.000 größer sein, als in die beiden anderen Richtungen. Die Faser kann beispielsweise entlang ihrer Hauptausdehnung oder Haupterstreckungsrichtung denselben oder zumindest einen im Wesentlichen ähnlichen Querschnitt aufweisen. Eine Mehrkomponentenfaser kann zum Beispiel wenigstens zwei Strukturen aufweisen. Die Strukturen können stoffschlüssig, beispielsweise durch Adhäsionskräfte, miteinander verbunden sein. Beispielsweise können die stoffschlüssig miteinander verbunden Strukturen sich unterscheidende Materialen oder Komponenten umfassen. Unter Umständen können die wenigstens zwei Strukturen direkt miteinander stoffschlüssig verbunden sein, ohne weitere Komponenten wie Kleber oder Matrixmaterial. Beispielsweise kann sich die Mehrkomponentenfaser dadurch von einem Garn, das wenigstens zwei Fasern aufweist, miteinander verblasen oder gezwirnt sind und/oder die eventuell über ein Matrixmaterial miteinander verbunden sind, unterscheiden. Die erste und/oder die zweite Komponente können dabei alle möglichen Werkstoffe oder Materialien oder Mischungen sein. Beispielsweise kann ein die andere Komponente, die nicht PTFE (Abk. von Polytetrafluorethylen) ist, eine Beimischung von PTFE umfassen. Unter Umständen kann die andere Komponente auch PTFE frei sein. Die andere Komponente kann zum Beispiels jedes organische oder anorganisch Material umfassen, beispielsweise einen Kunststoff, zum Beispiel Polyamid (PA) oder Polyester, wie Polycarbonate (PC) oder Polyester (PES).

Eine Struktur kann dabei beispielsweise jedes Bauteil oder Element sein, das die erste oder die zweite Komponente zumindest umfasst oder vollständig aus dieser hergestellt ist. Die Struktur kann dabei zum Beispiel entlang ihrer Haupterstreckungsrichtung einen im Wesentlich gleichen oder ähnlichen Querschnitt aufweisen. Ein im Wesentlich gleicher oder ähnlicher Querschnitt kann dabei eventuell Querschnitte aufweisen, die um bis zu 5% in jede Richtung voneinander abweichen. Zwei Bauteile oder Strukturen, die entlang der Haupterstreckungsrichtung der Faser parallel zueinander angeordnet sind, können sich beispielsweise beide parallel zu der Haupterstreckungsrichtung der Faser erstrecken, sodass die Mehrkomponentenfaser an jedem Querschnitt wenigstens zwei Strukturen unterschiedlicher Komponenten umfasst. Beispielsweise kann es sich um eine Bikomponentenfaser handeln, welche zwei unterschiedliche Komponenten umfasst. Die Mehrkomponentenfaser kann bei manchen Ausführungsbeispielen entlang ihrer Haupterstreckungsrichtung oder zumindest in einem Bereich der Haupterstreckungsrichtung denselben Querschnitt aufweisen. Der Bereich kann zum Beispiel wenigstens 10%, 20%, 50%, 70% oder 80% einer charakteristischen Ausdehnung der Gleitschicht entlang wenigstens einer Bewegungslinie entsprechen. In dem Querschnitt können dann auch die wenigstens zwei Strukturen immer gleich angeordnet sein. Dadurch kann sich die Mehrkomponentenfaser bei manchen Ausführungsbeispielen von einem Garn unterscheiden. Die Fasern sind bei einem Garn beispielsweise nicht über weite Strecken parallel zu einander angeordnet sondern miteinander verblasen, verzwirnt oder dergleichen.

Ergänzend kann die Mehrkomponentenfaser eine Länge aufweisen, die größer als 1%, einer charakteristischen Ausdehnung der Gleitschicht entlang der Bewegungslinie ist. Bei manchen Ausführungsbeispielen kann dadurch, dass die wenigstens eine Mehrkomponentenfaser als lange Faser und nicht als Schnipsel oder Kurzfaser in dem faserverstärkten Werkstoff vorliegt, eine homogenere Beschaffenheit der Gleitschicht erreicht werden. Eine Länge der Mehrkomponentenfaser ist dabei auf einen Einsatzzwecke bzw. eine Bauteilgröße oder Dimension der Gleitschicht bezogen. Weil diese Werte oder Dimensionen je nach Einsatzzweck oder Bauteilart stark voneinander abweichen können, wird die Länge der Mehrkomponentenfaser bezogen auf eine charakteristische Ausdehnung der Gleitschicht entlang der wenigstens einen Bewegungslinie angegeben. Die charakteristische Ausdehnung der Gleitschicht entlang der wenigstens einen Bewegungslinie kann beispielsweise eine Länge und/oder eine Breite der Gleitschicht sein. Die Bewegungslinie kann dabei eventuell entlang oder parallel zu einer Richtung liegen, in der die Gleitschicht eine Bewegung gegenüber einem anderen Bauteil durchführt. Die Bewegungslinie kann sich dabei zum Beispiel in einer Ebene, also auf einer geraden Fläche oder auch auf einer gekrümmten Fläche, beispielsweise einer Kugelobelfläche oder dergleichen befinden. Bei der Bewegung kann es sich eventuell um eine relative Bewegung zwischen dem Bauteil mit der Gleitschicht und einem anderen Bauteil oder einer anderen Komponente handeln. Bei ringförmigen Bauteilen oder Gleitschichten kann, wenn sich diese tatsächlich oder relativ in eine Umfangsrichtung drehen, eine Umfangslänge des Rings die charakteristische Ausdehnung sein. Ergänzend oder alternativ kann in Fällen in denen der Ring ein Gleiten entlang einer axialen Richtung ermöglicht auch eine Breite des Rings also eine Ausdehnung entlang der axialen Richtung, eine charakteristische Ausdehnung des Rings darstellen. Die Länge der Faser kann in Abhängigkeit der Dimension der Gleitschicht oder wenn die Faser nicht parallel zu der Bewegungslinie angeordnet ist auch wenigstens einer Ausdehnung von 20% oder auch mehr als 30% oder 50% einer charakteristischen Ausdehnung der Gleitschicht entlang der Bewegungslinie entsprechen. Bei anderen Ausführungsbeispielen, beispielsweise bei denen die Faser in oder nur in einem kleinen Winkel zu der Bewegungslinie verlegt ist, kann die Faser eine Länge von mindestens 80%, 90% oder sogar 100% der charakteristischen Ausdehnung aufweisen. In Fällen, bei denen die Faser gewickelt ist, kann diese sogar eine größere Länge als 100% der charakteristischen Ausdehnung aufweisen.

Ergänzend oder alternativ kann die Mehrkomponentenfaser eine Länge aufweisen, die einer Ausdehnung der Gleitschicht entlang einer Richtungslinie an der die Mehrkomponentenfaser angeordnet ist, entspricht. Solche Fasern können auch als kontinuierliche Fasern bezeichnet werden. Bei manchen Ausführungsbeispielen kann so ermöglicht werden, dass Fasern nicht in einer Richtung gestückelt oder unterbrochen angeordnet sind. Unter Umständen kann so eine Festigkeit der Gleitschicht erhöht und eventuell das Entstehen von Sollbruchstellen vermieden oder zumindest reduziert werden.

Ergänzend oder alternativ kann die Mehrkomponentenfaser einen Durchmesser zwischen 3 µm und 30 µm aufweisen. Bei manchen Ausführungsbeispielen kann so ermöglicht werden, dass ausreichend Schmier- oder Gleitmittel durch die Faser bereit gestellt werden kann.

Die Mehrkomponentenfaser kann unter Umständen als Einzelfaser oder auch in einem Faserbündel angeordnet sein. Gegebenenfalls kann die Faser auch in einem Garn angeordnet sein. Beispielsweise kann die Faser dann als ein Filament des Garns dienen. Das Garn kann nur eine Faser oder auch eine Mehrzahl von Fasern oder Filamenten umfassen. Ein Garn bezeichnet möglicherweise linienförmige textile Gebilde oder ein langes, dünnes Gebilde aus einer oder mehreren Fasern. Garne können beispielsweise unterschieden werden in gefachte Garne, welche aus zwei oder mehreren parallel aufgespulten, nicht miteinander verdrehten Garnen oder Fasern bestehen. Ferner gibt es gezwirnte Garne, welche aus mehreren zusammengedrehten Garnen bestehen. Ein weiteres Beispiel für Garne sind Filamengarne, welche theoretisch unendlich lange Fasern, welche Filamente genannt werden können, umfassen. Filamentgarne müssen nicht verdreht werden, der Zusammenhalt der Einzelfilamente kann auch durch Verwirbelungen gegeben werden. Es gibt glatte und texturierte Filamentgarne. Monofilamente bestehen aus nur einem Filament. Monofilamentgarne, welche auch als Monofasergarne bezeichnet. Multifilamentgarne, welche auch als Multifasergarne bezeichnet werden können, bestehen aus oder umfassen viele Einzelfasern.

Bei manchen Ausführungsbeispielen ist die Mehrkomponentenfaser in einem Garn angeordnet, das eine Feinheit zwischen 200 und 1200 detx aufweist. Bei manchen Ausführungsbeispielen kann so eine ausreichende Menge an Gleitmittel in die Gleitschicht eingebracht sein. Mit dtex wird ein Maß für eine Feinheit des Garns angegeben. Dabei gilt: 1 dtex (Abk. von Dezitex) = 0,1 tex oder 1 Gramm pro 10.000 Meter oder 1 tex = 10 dtex.

Zwei Strukturen, die die gleiche Komponente umfassen, können die gleiche Form oder Querschnittsform oder sich unterscheidende Querschnittsformen aufweisen. Ergänzend oder alternativ kann die erste Struktur und die zweite Struktur beispielsweise den gleichen Querschnitt aufweisen. Bei manchen Ausführungsbeispielen kann so ermöglicht werden, dass die Mehrkomponentenfaser auf einfache Art und Weise herstellbar ist. Beispielsweise kann wenigstens eine der Strukturen oder auch die Faser als Querschnitt einen Kreis, einen Halbkreis, ein Kreissegment, ein Rechteck, ein Quadrat oder dergleichen aufweisen.

Ergänzend oder alternativ kann die erste Komponente als Matrix in der Mehrkomponentenfaser und die zweite Komponente als eine Mehrzahl von Fibrillen angeordnet sein. Bei manchen Ausführungsbeispielen kann so eine mechanische Eigenschaft der Mehrkomponentenfaser erhöht sein. Eventuell können die Fibrillen bzw. deren Durchmesser dabei um wenigstens einen Faktor 5, 10 oder sogar 100 kleiner sein als ein Durchmesser der Mehrkomponentenfaser.

Bei manchen Ausführungsbeispielen ist die erste Komponente als Mantel und die zweite Komponente als Kern angeordnet. Unter Umständen kann möglicherweise so eine Verbindung zwischen dem Matrixmaterial und der Faser verbessert sein.

Bei manchen Ausführungsbeispielen ist die erste Komponente in Form von zwei Schichten angeordnet, die senkrecht zu der Haupterstreckungsrichtung nebeneinander liegen und zwischen sich wenigstens eine Schicht der zweiten Komponente aufnehmen. Bei manchen Ausführungsbeispielen kann so ermöglicht werden, dass die Mehrkomponentenfaser an ihrer Oberfläche unterschiedliche Komponenten aufweisen kann.

Bei manchen Ausführungsbeispielen weist die Mehrkomponentenfaser einen sternförmigen Querschnitt auf. Beispielsweise kann dann die erste Komponente an oder in wenigstens einer Spitze und/oder Ecke des Querschnitts angeordnet sein und die zweite Komponente in einer durchschnittliche Querschnittsausdehnung der Mehrkomponentenfaser. Bei manchen Ausführungsbeispielen kann so ermöglicht werden, dass die Mehrkomponentenfaser eine möglichst große spezifische Oberfläche im Vergleich zu ihrem Volumen aufweist und sich se eventuell noch besser mit dem Matrixmaterial verbinden kann.

Ausführungsbeispiele betreffen auch ein Gleitlager mit dem Bauteil nach wenigstens einem der beschriebenen Ausführungsbeispiele wobei das Bauteil ein Lagerung oder eine Gleitlagerbuchse ist. Alternativ kann das Bauteil auch eine Linearführung und/oder ein Schlitten oder ein Führungswagen in einem Linearsystem sein. Bei dem Gleitlager kann es sich auch um ein Gelenklager handeln. Dann dient das Bauteil als Gelenklagerinnenring und/oder als Gelenklageraußenring. Das Bauteil weist als Gelenklagerinnenring eine nach radial außen gewölbte Oberfläche auf und die Gleitschicht ist radial außen angeordnet. Als Gelenklageraußenring weist das Bauteil eine nach radial innen gewölbte Oberfläche auf und die Gleitschicht ist radial innen angeordnet.

Die in der vorstehenden Beschreibung, den nachfolgenden Ansprüchen und den beigefügten Figuren offenbarten Ausführungsbeispiele sowie deren einzelne Merkmale können sowohl einzeln wie auch in beliebiger Kombination für die Verwirklichung eines Ausführungsbeispiels in ihren verschiedenen Ausgestaltungen von Bedeutung sein und implementiert werden.

So zeigen die Figuren schematisch die nachfolgenden Ansichten:
- Fig. 1: zeigt eine schematische Darstellung einer Schnittdarstellung eines Bauteils, umfassend wenigstens eine Gleitschicht gemäß einem Ausführungsbeispiel;
- Fig. 2a bis 2g: zeigt eine schematische Darstellung von Querschnitten von Mehrkomponentenfasern für ein Bauteil bzw. eine Gleitschicht gemäß einem Ausführungsbeispiel;
- Fig. 3: zeigt eine schematische Darstellung einer Seitenansicht eines Bauteils, umfassend wenigstens eine Gleitschicht gemäß einem weiteren Ausführungsbeispiel;
- Fig. 4: zeigt eine schematische Darstellung einer Draufsicht eines Bauteils, umfassend wenigstens eine Gleitschicht gemäß einem weiteren Ausführungsbeispiel;
- Fig. 5: zeigt eine schematische Darstellung einer Seitenansicht eines Bauteils, umfassend wenigstens eine Gleitschicht gemäß einem weiteren Ausführungsbeispiel;
- Fig. 6: zeigt eine schematische Darstellung einer Draufsicht eines Bauteils mit einer Gleitschicht gemäß einem weiteren Ausführungsbeispiel.

Bei der nachfolgenden Beschreibung der beigefügten Darstellungen bezeichnen gleiche Bezugszeichen gleiche oder vergleichbare Komponenten. Ferner werden zusammenfassende Bezugszeichen für Komponenten und Objekte verwendet, die mehrfach in einem Ausführungsbeispiel oder in einer Darstellung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

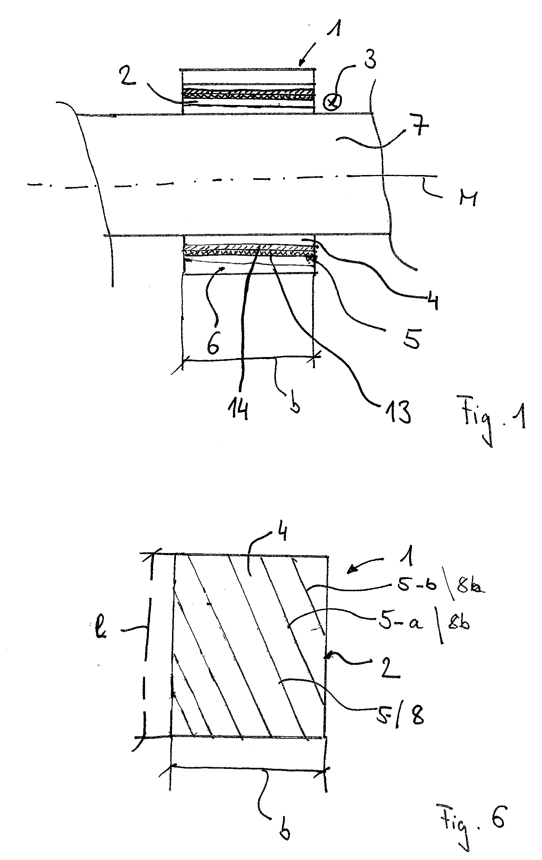

Fig. 1 zeigt eine schematische Darstellung einer Schnittdarstellung eines Bauteils 1, umfassend wenigstens eine Gleitschicht 2 gemäß einem Ausführungsbeispiel. Das Bauteil 1 ist ausgebildet, um über die Gleitschicht 2 entlang wenigstens einer Bewegungslinie 3 zu gleiten. Die Gleitschicht 2 umfasst einen faserverstärkten Werkstoff mit wenigstens einer Mehrkomponentenfaser 5, die wenigstens eine in wenigstens einer ersten Struktur 13 angeordnete erste Komponente aufweist ist und wenigstens eine zweite in wenigstens einer zweiten Struktur 14 angeordnete zweite Komponente aufweist. Die beiden Strukturen 13 und 14 sind stoffschlüssig miteinander verbunden und in einer Haupterstreckungsuchtung der Mehrkomponentenfaser 5 parallel zueinander angeordnet. Entweder die erste Komponente oder die zweite Komponente ist PTFE.

Bei dem Ausführungsbeispiel der Fig. 1 ist das Bauteil 1 als eine Gleitlagerbüchse mit einem rohrförmigen Körper ausgebildet und an einer Welle als andere Komponente 7 angeordnet ist. Die Gleitschicht 2 ist radial innen an einem rohrförmigen Grundkörper 6 des Bauteils angeordnet. Das Bauteil 1 kann sich um eine Mittelachse M über die Gleitschicht 2 um die andere Komponente 7 entlang der Bewegungslinie 3 drehen bzw. an der anderen Komponente 7 gleiten. Damit ist eine charakteristische Ausdehnung entlang der Bewegungslinie 3 in diesem Fall ein Umfang des Bauteils 1. Genauso gut kann das Bauteil 1 als relativ beweglich angeordnetes Bauteil feststehend angeordnet sein und die andere Komponente 7 kann sich gegenüber dem Bauteil 1 bewegen. Analog können sowohl das Bauteil 1 wie auch die andere Komponente 7 Bewegungen gegeneinander ausführen.

Die Mehrkomponentenfaser 5 ist bei dem Ausführungsbeispiel der Fig. 1 eine Bikomponentenfaser, welche genau zwei Komponenten umfasst. Als Bikomponenten-Fasermaterialien dienen dabei als erste Komponente für die erste Struktur 13 PTFE sowie eine weitere verstärkende Komponente für die zweite Struktur 14, welche beispielsweise organischen oder anorganischen Ursprungs sein kann. Die zweite Komponente kann dabei in Abhängigkeit von einem Einsatzgebiet, beispielsweise zur Kostenreduktion oder zur Ausnutzung einer technischen Eigenschaft, zum Beispiel einer mechanische Eigenschaft gewählt werden.

Die Gleitschicht 2, welche auch als faserverstärkter Gleitwerkstoff bezeichnet werden kann, umfasst neben der wenigstens einen Mehrkomponentenfaser 5, die auch als PTFE-Bikomponenten-Mono-oder Multifilamentgarn vorliegen kann, ein Matrixmaterial 4. Bei dem Matrixmaterial 4 kann es sich um eine duroplastische oder thermoplastische Matrix handeln, in die als kurze, lange oder als Endlosfaser ausgebildete Mehrkomponentenfasern 5 eingebettet sind. Das duroplastische oder thermoplastische Matrixmaterial kann optional mit mikro- bzw. nanoskaligen Füllstoffen additiviert werden. Bei dem Ausführungsbeispiel der Fig. 1 handelt es sich sogar um sog. kontinuierliche Fasern, die sich entlang einer Richtung, in der sie angeordnet sind, vollständig durch das Bauteil 1 erstrecken. Die wenigstens eine Mehrkomponentenfaser 5 erstreckt sich in axialer Richtung M von einer Bauteilseite zu der anderen Bauteilseite. Bei einigen weiteren, nicht dargestellten Ausführungsbeispielen können die Mehrkomponentenfasern oder die wenigstens eine Mehrkomponentenfaser ergänzend oder alternativ auch in Umfangsrichtung als lange oder kontinuierliche Fasern angeordnet sein. Wenn das Bauteil 1 und die Komponenten 7 in axialer Richtung Relativbewegungen zueinander ausführen würden, wäre die charakteristische Ausdehnung der Gleitschicht 2 entlang der wenigstens einen Bewegungslinie eine Breite b der Gleitschicht 2, also die Ausdehnung in die axiale Richtung M .

Die wenigstens eine Mehrkomponentenfaser 5 kann bei manchen Ausführungsbeispiele in einem textilen Flächengebilde und/oder gewickelt angeordnet sein. Die Mehrkomponentenfaser 5 kann unter Umständen als Einzelfaser oder auch in einem Faserbündel angeordnet sein. Gegebenenfalls kann die Faser auch in einem Garn angeordnet sein. Beispielsweise kann die Faser dann als ein Filament des Garns dienen. Das Garn kann nur eine Faser oder auch eine Mehrzahl von Fasern oder Filamenten umfassen. Die Garne können zusätzlich mit reibungsmindernden oder Verschleiß reduzierenden oder mechanische Eigenschaften verbessernden Füllstoffen additiviert und/oder imprägniert werden.

Das Bauteil 1 weist auch einen Grundkörper 6 auf. Der Grundkörper 6 kann ein anderes Material als die Gleitschicht 2 aufweisen, beispielsweise Stahl. Der Grundkörper 6 und die Gleitschicht 2 können miteinander verklebt oder auf andere Weise aneinander befestigt sein. Bei manchen Ausführungsbeispielen kann eine der anderen Komponente 7 zugewandte Seite der Gleitschicht 2 auch als Gleitfläche bezeichnet werden. Die Gleitschicht 2 kann dabei eine Dicke aufweisen, die kleiner ist als eine Gesamtdicke des Bauteils 1. Die Gleitschicht 2 kann dabei beispielsweise an nur einer und/oder einer Mehrzahl und/oder sogar allen Oberflächen des Bauteils 1 bzw. dem Grundkörper 6 angeordnet sein.

Bei einigen weiteren, nicht dargestellten Ausführungsbeispielen kann eventuell der Grundkörper 6 entfallen und das Bauteil 1 vollständig aus dem faserverstärkten Werkstoff der Gleitschicht 2 hergestellt sein. Die kann auch der Fall sein, wenn das Bauteil nicht als Gleitlagerbuchse, sondern als Gleitlagerring, Linearführung oder anderweitig ausgebildet ist. Unter Umständen kann der Grundköper auch eine andere Form aufweisen, beispielsweise eine Platte, eine Schiene, ein Bauteil mit einer Führungsnut oder dergleichen. Bei einigen weiteren, nicht dargestellten Ausführungsbeispiele kann es sich bei er benachbarten Komponente um ein benachbartes Bauteil handeln, wie einen Lagerring, eine Welle, ein Wellengehäuse, ein Gehäuse, eine Bohrung, einen Führungswagen für die oder dergleichen. Die Gleitschicht 2 wäre dann jedoch zumindest an der Oberfläche des Bauteils 1 angeordnet, die relativ beweglich zu der anderen Komponente angeordnet wäre. Bei dem Bauteil kann es sich beispielsweise um eine Gleitlagerbuchse, einen Lagerring, eine Gleitschiene, eine Gleitfläche, ein Bauteil einer Linearführung oder dergleichen handeln.

Bei manchen Ausführungsbeispielen kann die Gleitschicht 2 bzw. der Gleitwerkstoff als einzige Faser oder Faserart die Mehrkomponentenfasern 5 bzw. Bikomponentenfasern umfassen. Alternativ kann die Gleitschicht 2 auch zusätzliche Verstärkungsfasern, organischem oder anorganischem Ursprungs aufweisen, diese können beispielsweise PTFE frei sein.

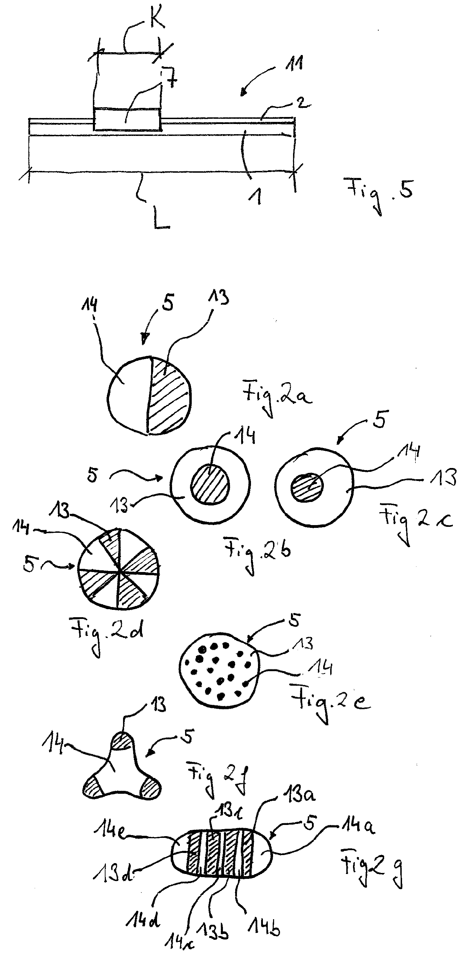

Die Anordnung der beiden Komponenten oder Strukturen 13 und 14 in der Mehrkomponentenfaser 5 ist variabel. Die Fig. 2a bis 2g zeigen eine schematische Darstellung von Querschnitten von Mehrkomponentenfasern 5 für das Bauteil 1 bzw. die Gleitschicht 2 gemäß einem Ausführungsbeispiel.

Bei der Mehrkomponentenfaser 5 der Fig. 2a weisen die Strukturen 13 und 14 jeweils einen halbkreisförmigen Querschnitt auf und sind so angeordnet, dass sie sich zu einem Vollkreis ergänzen. Diese Anordnung wird auch Seite an Seite (S/S) (von engl.: side by side) Bikomponentenfaser bezeichnet. Bei anderen Ausführungsbeispielen können die Strukturen 13 und 14 oder auch die Faser 5 selbst, andere Querschnitte, beispielsweise Kreis, Rechteck, Quadrat oder dergleichen aufweisen.

Die Fig. 2b und 2c zeigen jeweils eine Mehrkomponentenfaser 5 bei der die Struktur 13 mit der ersten Komponente als Mantel (von engl.: sheath-core) und die zweite Struktur 14 mit der zweiten Komponente als Kern angeordnet sind. Mit anderen Worten kann es sich beispielsweise um eine Matrix-Kern Bikomponentenfaser handeln, wobei PTFE als eine der Komponenten im Kern oder Mantel angeordnet werden kann.

Dabei ist bei der Mehrkomponentenfaser 5 der Fig. 2b der Kern bzw. die Struktur 14 konzentrisch zu dem Mantel und bei der Fig. 2c exzentrisch zu dem Mantel angeordnet. Auch bei dem Ausführungsbeispiel der Fig. 2b und 2c weisen die Strukturen 13 und 14 und die Faser 5 jeweils kreisförmige Querschnitte auf. Natürlich können dies auch bei sog Mantel-Kern (C/C) Bikomponentenfasern, die bereits beschriebenen alternativen Querschnittsformen aufweisen.

Bei dem Ausführungsbeispiel der Fig. 2d ist die Mehrkomponentenfaser 5 segmentiert als Kuchen (von engl.: segmentetd-pie) ausgebildet. Die Strukturen 13 und 14 weisen dabei jeweils eine Form als Kreissektor auf und sind abwechselnd angeordnet. Die Mehrkomponentenfaser 5 umfasst jeweils vier erste Strukturen 13 und vier zweite Strukturen 14. Bei anderen Ausführungsbeispielen kann auch eine andere Anzahl an Strukturen vorhanden sein.

Bei dem Ausführungsbeispiel der Fig. 2e ist die Mehrkomponentenfaser 5 als Matrix-Fibrillen (M/F) Bikomponentenfasern ausgebildet. Dabei ist erste Komponente in der ersten Struktur 13 als Matrix und die zweite Komponente in der zweiten Struktur 14 als eine Mehrzahl von Fibrillen ausgebildet. Die Matrix 14 der Mehrkomponentenfaser 5 unterscheidet sich dabei oder kann sich von dem Matrixmaterial 4 der Gleitschicht 2 unterscheiden. Diese Anordnung der Strukturen 13 und 14 kann auch als Islands-in-the-sea bezeichnet werden.

Bei dem Ausführungsbeispiel der Fig. 2f ist die Mehrkomponentenfaser 5 als trilobale Fasern (oder engl: tipped) ausgebildet sein. Die Faser 5 weist dabei einen sternförmigen Querschnitt auf, mit drei Spitzen. Die erste Komponente ist dabei in der ersten Struktur 13 jeweils als Spitze des Sterns angeordnet, währen die zweite Komponenten in der zweiten Struktur 14 als ein mittlerer Bereich des Sterns angeordnet ist. Bei einigen weiteren, nicht dargestellten Ausführungsbeispielen kann der Stern auch eine andere Anzahl von Spitzen aufweisen.

Des Weiteren können die Strukturen 13 und 14 auch wie in Fig. 2g erkennbar in Schichten, als segmentiertes Band (von engl.: segmented-ribbon) angeordnet sein. Dabei ist die erste Struktur 13 mit der ersten Komponente senkrecht zu ihrer Haupterstreckungsrichtung in den Schichten 13a, 13b, 13c und 13d angeordnet, zwischen denen jeweils als zweite Struktur 14b, 14c oder 14d eine Schicht der zweiten Komponente angeordnet ist. Weitere, quer zur Haupterstreckungsrichtung außen liegende Schichten, nämlich Strukturen 14a und 14e weisen einen halbkreisförmigen Querschnitt auf. Bei einigen weiteren, nicht dargestellten Ausführungsbeispielen kann die Faser 5 auch eine andere Anzahl von Schichten oder die Schichten andere Querschnittsformen aufweisen.

Die Gleitschicht 2 kann bei manchen Ausführungsbeispielen auch als gewebeverstärkter Verbundgleitwerkstoff mit gleichmäßig verteiltem PTFE- bzw. Verstärkungsmaterial-Anteil in alle Richtungen, insbesondere in Dickenrichtung, vorliegen. Dadurch kann möglicherweise ein quasi-isotropes Eigenschaftsprofil in Dickenrichtung, welches unter Umständen für Druckbeanspruchungen geeignet sein kann, erreicht werden. Unter Umständen kann zudem ein reduzierter PTFE-Materialeinsatz und dadurch eine preisgünstige Herstellung ermöglicht werden. Durch Einsatz von Mehr-oder Bikomponetenfasern zum Beispiel mit PTFE im Kern als erste Struktur 13, sowie einem Verstärkungsmaterial im Mantel als zweite Struktur 14 lassen sich bei manchen Ausführungsbeispielen zum Beispiel PTFE-Gleitgewebe-Verbundwerkstoffe mit guter Faser-Matrix-Anhaftung und gleichmäßiger Verteilung des PTFEs im Werkstoff herstellen. Die Faser-Matrix-Anhaftung kann essentiell zur Gewährleistung der mechanischen Stabilität und tribologischen Eignung des Verbundwerkstoffs sein. Ferner können unter Umständen Verbundwerkstoffe mit Bikomponetenfasern für Gleitanwendungen gemäß Ausführungsbeispielen zu verbesserten Gleiteigenschaften, aber auch zu einer verstärkten Abriebfestigkeit und damit zu einer verlängerten Lebensdauer einer Lagerung führen. Auch kann sich bei manchen Ausführungsbeispielen eine lineare Verschleißcharakteristik nach Abschluss der Einlaufphase ergeben. Dies kann unter Umständen zu einer einfacheren mathematischen Beschreibbarkeit, einer einfacheren Vorhersage der Lebensdauer und/oder einem robusteren System führen.

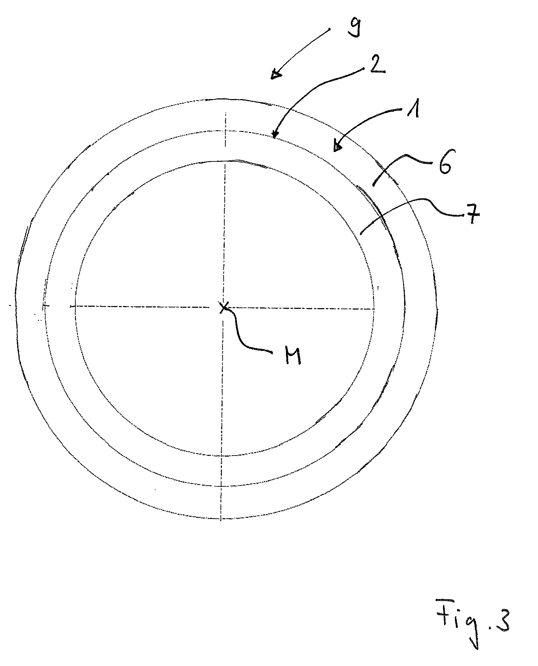

Die Fig. 3 bis 6 zeigen unterschiedliche Ausführungsbeispiels von Bauteilen 1 mit der Gleitschicht 2. Die Gleitschicht 2 umfasst dabei den faserverstärkten Werkstoff gemäß wenigstens einem der bereits beschriebenen Ausführungsbeispiele.

Fig. 3 zeigt eine schematische Darstellung einer Seitenansicht eines Bauteils 1 mit wenigstens einer Gleitschicht 2 gemäß einem weiteren Ausführungsbeispiel. Das Bauteil 1 ist in diesem Fall als Lagerung und genauer gesagt als Lageraußening für ein Gleitlager 9 ausgebildet. Die Gleitschicht 2 ist an einer nach radial innen gerichteten Fläche an dem Grundkörper 6 angeordnet. Sowohl der Grundkörper 6 wie auch die Gleitschicht 2 sind jeweils als Hohlzylinder mit einer kreisringförmigen Grundfläche ausgebildet. Das Bauteil 1 als Außenring gleitet über seine Gleitschicht 2 an einem Innenring, der in diesem Fall als andere Komponente 7 dient. Unter Umständen kann auch der Innenring als Bauteil gemäß Ausführungsbeispielen ausgebildet sein und an seiner nach radial außen gerichteten Seite eine nicht dargestellte Gleitschicht 2 aufweisen.

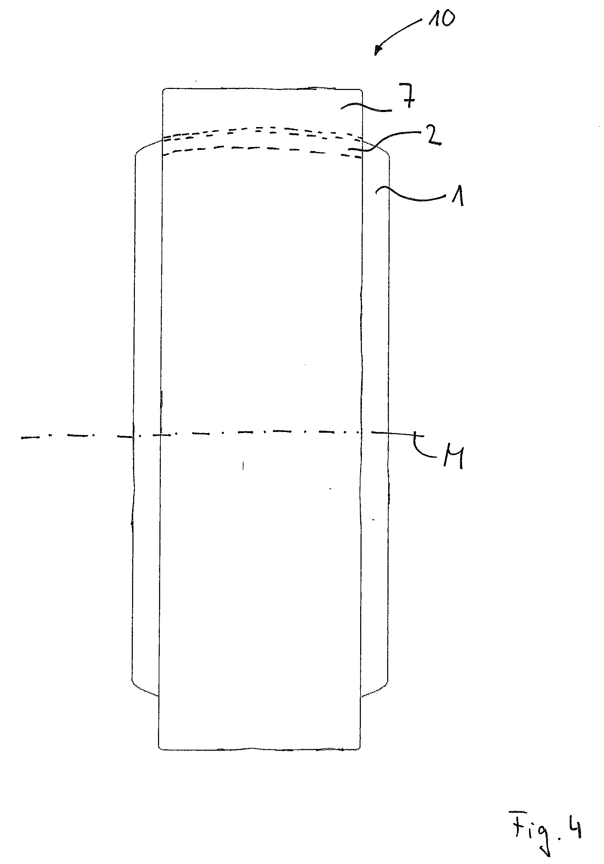

Fig. 4 zeigt eine schematische Darstellung einer Draufsicht eines Bauteils 1, umfassend wenigstens eine Gleitschicht 2 gemäß einem weiteren Ausführungsbeispiel, wobei das Bauteil 1 als Gelenklagerinnenring in einem Gelenklager 10 angeordnet ist. Das Bauteil 1 und die Gleitschicht 2 umfassen eine nach radial außen gewölbte Fläche, sodass der Gelenklagerinnenring in einem mittleren Bereich einen größten Durchmesser im Vergleich zu den in axialer Richtung M weiter außen liegenden Bereichen aufweist. Die nach außen gewölbte Fläche kann auch sphärisch, kalottenförmig oder kugelschalenförmig ausgebildet sein. Die Gleitschicht 2 ist zumindest abschnittsweise oder vollständig an einer nach radial außen gerichteten Fläche des Gelenklagerinnenrings angeordnet. Der Gelenklagerinnenring gleitet über seine Gleitschicht 2 relativ gegenüber einem Gelenklageraußenring als andere Komponente 7. Der Gelenklageraußenring weist eine nach radiale innen gerichtet Fläche auf, die als Negativ zu der Gleitschicht 2 ausgebildet und entgegengesetzt zu dieser gewölbt ist. Bei diesem Ausführungsbeispiel wird die Gleitschicht 2 in wenigsten zwei Richtungskomponenten beansprucht. Unter Umständen kann auch oder nur der Gelenklageraußenring als Bauteil gemäß Ausführungsbeispielen ausgebildet sein und an seiner nach radial innen gerichteten Fläche eine Gleitschicht gemäß den Ausführungsbeispielen aufweisen. Beispielsweise kann die Gleitschicht in dem Außenring angeordnet sein.

Fig. 5 zeigt eine schematische Darstellung einer Seitenansicht eines Bauteils 1, umfassend wenigstens eine Gleitschicht 2 gemäß einem weiteren Ausführungsbeispiel, wobei das Bauteil 1 als Linearführung in einem Linearsystem dient. Das Bauteil 1 gleitet über die Gleitschicht 2 gegenüber einem Führungswagen als andere Komponente 7. Eine charakteristische Ausdehnung des Bauteils 2 ist in diese Falle eine Länge L der Linearführung.

Analog kann auch der Führungswagen als Bauteil 1 ausgebildet sein und eine nicht dargestellte Gleitschicht 2 aufweisen. Eine charakteristische Ausdehnung des Bauteils wäre in diese Falle eine Länge K des Führungswagens. Bei dem Bauteil 1 handelt es sich bei manchen Ausführungsbeispielen nicht um ein Zwischenprodukt oder Halbzeug, sondern um ein fertiges Bauteil für ein Gleitlager.

Das Bauteil mit der Gleitschicht gemäß Ausführungsbeispielen kann bei jeglicher Art von wartungsfreien Gleitkontakten, Gleitbuchsen, Anlaufscheiben, Gelenklager, Linearführungen, Gleitlager und/oder Linearsysteme eingesetzt werden.

Fig. 6 zeigt eine schematische Darstellung einer Draufsicht eines Bauteils 1 mit einer Gleitschicht 2 gemäß einem weiteren Ausführungsbeispiel. Das Bauteil 1 und die Gleitschicht 2 sind im Wesentlichen ähnlich zu dem des Ausführungsbeispiels der Fig. 1, unterscheiden sich jedoch durch die Anordnung der wenigstens einen Mehrkomponentenfaser 5. Bei den Fasern 5 handelt es sich um kontinuierliche Fasern, da diese eine Länge aufweisen, die einer Ausdehnung der Gleitschicht 2 entlang einer Richtungslinie 8, die an der die Mehrkomponentenfaser 5 angeordnet ist, entspricht. Dabei kann sich die Ausdehnung der Gleitschicht 2 entlang der Richtungslinie 8-a und damit auch einer Länge der Faser 5-a von einer Richtungslinie 8-b und damit auch einer Länge der Faser 5-b unterscheiden. Da sowohl die Faser 5-a wie auch die Faser 5-b die Gleitschicht in ihrer Richtung vollständig durchdringt, handelt es sich jeweils um eine kontinuierliche Faser. Bei einigen weiteren, nicht dargestellten Ausführungsbeispielen kann die Richtungslinie bzw. die Faser auch parallel zu einer Länge 1 und/oder einer Breite b der Gleitschicht 2 angeordnet sein. Bei einigen weiteren, nicht dargestellten Ausführungsbeispielen kann die Mehrkomponentenfaser 5 auch anders angeordnet sein und/oder eine andere Länge aufweisen.

Bei manchen Ausführungsbeispielen handelt es sich bei der Gleitschicht 2 um einen faserverstärkten, zum Beispiel gewebeverstärkten oder alternativ auch in einem Wickelprozess hergestellten polymeren Verbundwerkstoff für Gleitlageranwendungen. Dieser kann ein Gewebe umfassen, welches mit einem polymeren Matrixmaterial imprägniert ist. Zur Herstellung des Verbundwerkstoffs werden Garne oder Fasern, bestehend aus Polytetrafluorethylen (PTFE)-Bikomponentenfasern, verwendet. Es kommen also Fasern zum Einsatz die wenigstens zwei Komponenten, nämlich PTFE und eine weitere verstärkende Komponente umfassen. Dies kann unter Umständen eine gleichmäßige Verteilung des PTFE im Verbundwerkstoff, auch in vertikaler Dickenrichtung ermöglichen. Dadurch können eventuell die mechanischen Eigenschaften, wie zum Beispiel Druckmodul, Festigkeit und Härte, etc. des Verbundwerkstoff (zum Beispiel Gleitgewebe) gegenüber konventionellen faserverstärkten Verbundwerkstoffen verbessert werden. Somit könnte eventuell auch eine verbesserte Ausbildung eines PTFE-Transferfilms im Einsatz erreicht werden. Zum Beispiel kann ein solcher Verbundwerkstoff bei manchen Ausführungsbeispielen ermöglichen, die eingesetzte Menge des teuren Hochleistungskunststoff PTFE zu reduzieren, indem dieser teilweise durch einen günstigeren Standardwerkstoff ersetzt wird, ohne dass die gewünschte reibungsmindernde Wirkung des PTFE verloren geht. Ein solcher Verbundwerkstoff kann eventuell in wartungsfrei betrieben Anwendungen oder Lagerungen eingesetzt werden und muss gegebenenfalls nicht zusätzlich mit einem Schmierstoff geschmiert werden.

Die in der vorstehenden Beschreibung, den nachfolgenden Ansprüchen und den beigefügten Figuren offenbarten Ausführungsbeispiele sowie deren einzelne Merkmale können sowohl einzeln wie auch in beliebiger Kombination für die Verwirklichung eines Ausführungsbeispiels in ihren verschiedenen Ausgestaltungen von Bedeutung sein und implementiert werden.

Bei einigen weiteren Ausführungsbeispielen können Merkmale, die in anderen Ausführungsbeispielen als Vorrichtungsmerkmal offenbart sind, auch als Verfahrensmerkmale implementiert sein. Ferner können gegebenenfalls auch Merkmale, die in manchen Ausführungsbeispielen als Verfahrensmerkmale implementiert sind, in anderen Ausführungsbeispielen als Vorrichtungsmerkmale implementiert sein.

### Bezugszeichenliste

- 1: Bauteil
- 2: Gleitschicht
- 3: Bewegungslinie
- 4: Matrixmaterial
- 5: Mehrkomponentenfaser
- 6: Grundkörper
- 7: andere Komponente
- 8: Richtungslinie
- 9: Gleitlager
- 10: Gelenklager
- 11: Linearsystem
- 13: erste Struktur
- 14: zweite Struktur

- b: Breite / Bauteil Gleitlagerbüchse
- L: Länge / Bauteil Linearsystem
- K: Länge / Bauteil
- L: Länge / Gleitschicht

## Patentansprüche

1. Bauteil (1), umfassend wenigstens eine Gleitschicht (2),
wobei das Bauteil (1) ausgebildet ist, um über die Gleitschicht (2) entlang wenigstens einer Bewegungslinie (3) zu gleiten,
wobei die Gleitschicht (2) einen faserverstärkten Werkstoff umfasst,
wobei der faserverstärkte Werkstoff wenigstens eine Mehrkomponentenfaser (5) aufweist, die wenigstens eine in wenigstens einer ersten Struktur (13) angeordnete erste Komponente aufweist ist und wenigstens eine zweite in wenigstens einer zweiten Struktur (14) angeordnete Komponente aufweist, wobei die erste und die zweite Struktur (13, 14) stoffschlüssig miteinander verbunden sind und in einer Haupterstreckungsrichtung der Mehrkomponentenfaser (5) parallel zueinander angeordnet sind, wobei entweder die erste Komponente oder die zweite Komponente PTFE ist.

2. Bauteil nach Anspruch 1, wobei die Mehrkomponentenfaser (5) eine Länge aufweist, die größer ist, als 1% einer charakteristischen Ausdehnung der Gleitschicht (2) entlang der Bewegungslinie (3).

3. Bauteil nach wenigstens einem der vorhergehenden Ansprüche, wobei die Mehrkomponentenfaser (5) einen Durchmesser zwischen 3 µm und 30 µm aufweist.

4. Bauteil nach einem der vorhergehenden Ansprüche, wobei die Mehrkomponentenfaser (5) in einem Garn angeordnet ist, das eine Feinheit zwischen 200 und 1200 dtex aufweist.

5. Bauteil nach einem der vorhergehenden Ansprüche, wobei die erste Struktur (13) und die zweite Struktur (14) den gleichen Querschnitt aufweisen.

6. Bauteil nach einem der vorhergehenden Ansprüche, wobei die erste Komponente als Matrix (13) und die zweite Komponente als eine Mehrzahl von Fibrillen (14) angeordnet ist.

7. Bauteil nach einem der vorhergehenden Ansprüche, wobei die erste Komponente als Mantel (13) und die zweite Komponente als Kern (14) angeordnet sind.

8. Bauteil nach einem der vorhergehenden Ansprüche, wobei die erste Komponente senkrecht zu ihrer Haupterstreckungsrichtung in wenigstens zwei Schichten (13) angeordnet ist, die zwischen sich wenigstens eine Schicht (14) der zweiten Komponente aufnimmt.

9. Bauteil nach einem der vorhergehenden Ansprüche, wobei erste Komponente in wenigstens einer Spitze (13) und/oder Ecke eines Querschnitts angeordnet ist und die zweite Komponente in einer durchschnittlichen Querschnittsausdehnung (14) der Mehrkomponentenfaser (5).

10. Gleitlager, Linearsystem oder Gelenklager mit dem Bauteil (1) nach einem der vorhergehenden Ansprüche, wobei das Bauteil ein Lagerring, eine Gleitlagerbuche, eine Linearführung bzw. ein Gelenklagerring ist.
